# EUROPEAN PATENT SPECIFICATION

(11) **EP 4 068 566 B1**
(45) Date of publication and mention of the grant of the patent: **29.05.2024**
(21) Application number: 21757476.3
(22) Date of filing: 19.01.2021
(51) Int. Cl.: H02J 7/14, H02J 7/00, B60L 50/15, B60L 50/61, B60L 58/14, B60L 58/15

(54) **VOLTAGE CONTROL METHOD AND DEVICE FOR MOTOR**
SPANNUNGSSTEUERUNGSVERFAHREN UND -VORRICHTUNG FÜR EINEN MOTOR
PROCÉDÉ ET DISPOSITIF DE COMMANDE DE TENSION POUR MOTEUR

(30) Priority: 20.02.2020 CN 202010105375
(43) Date of publication of application: 05.10.2022
(73) Proprietor: Great Wall Motor Company Limited, Baoding, Hebei 071000 (CN)
(72) Inventor: WANG, Yinlei, Baoding, Hebei 071000 (CN); KANG, Tong, Baoding, Hebei 071000 (CN); LING, Wenchao, Baoding, Hebei 071000 (CN); WANG, Baogang, Baoding, Hebei 071000 (CN); DENG, Weifeng, Baoding, Hebei 071000 (CN); LIU, Xiu, Baoding, Hebei 071000 (CN)
(74) Representative: Klunker IP Patentanwälte PartG mbB
(86) International application number: PCT/CN2021/072670
(87) International publication number: WO 2021/164486

(56) References cited:
- CN-A- 106 100 477
- CN-A- 106 887 878
- CN-A- 106 887 878
- CN-A- 108 674 188
- CN-A- 109 305 050
- CN-A- 109 888 885
- CN-A- 110 635 527
- DE-A1-102018 202 111
- KR-A- 20110 062 810
- US-A1- 2011 140 672
- US-A1- 2017 166 077
- US-A1- 2017 264 104

## Description

### TECHNICAL FIELD

The present disclosure relates to the technical field of vehicle controlling, and particularly relates to a method and apparatus for controlling a voltage of an electricity-generation-starting-up integrated electric machine.

### BACKGROUND

With the gradual development of vehicle controlling technologies, for 48V micro hybrid electrical vehicles, the electric generators of conventional engines have been reformed by using an electricity-generation-starting-up integrated electric machine (Belt Driven Starter Generator, BSG), to form a belt-driven BSG.

Currently, the designed rotational speed of the BSGs is 0-15000 revolutions per minute, and the designed electric quantity of the 48V battery is 1.5 kilowatt-hours/hour. For vehicles equipped with a BSG, it is possible to include a mode in which the BSG generates electricity to charge the battery. Due to the BSG characteristic, the torque error is ±3Nm when it within 100Nm, and according to the power formula P=T*n/9550, wherein P represents the power, T represents the torque, and n represents the rotational speed, it can be known that the torque error causes a large power error in the high-rotational-speed zone.

The available battery electric quantity and the available power of 48V micro hybrid electrical vehicles are very low at a low temperature, and in this case the power error greatly affects the 48V battery, it results in over-charge or over-discharge of the battery, and also results in failure of the 48V battery and affection on the life of the 48V battery. US 2017/0166077 A1 discloses a method of recharging a supplementary battery of a vehicle comprising the step of acquiring voltage, charged current of a supplementary battery, starting a timer when the charged current exceeds a limit range, updating a current limit on the basis of a timer value and temperature information of the supplementary battery and controlling a target voltage by subtracting a voltage corresponding to one limit voltage step from the current LDC target voltage. US 2017/0264104 A1 discloses an electric power supply system for a vehicle including a first battery, a second battery connected in parallel with the first battery, a voltage sensor configured to detect a voltage value of the second battery, a current sensor configured to detect a current value of the second battery, an electronic control unit configured to make a voltage of the alternator fluctuate according to a predetermined voltage waveform, and calculate internal resistance of the second battery using the voltage value and the current value of the second battery respectively detected by the voltage sensor and the current sensor while the electronic control unit is making the voltage of the alternator fluctuate according to the predetermined voltage waveform.

### SUMMARY

In view of the above, the present invention is set out in the appended set of claims. It provides a method and apparatus for controlling a voltage of an electricity-generation-starting-up integrated electric machine, to solve the problems of the failure of 48V batteries and the affection on the life of 48V batteries.

In order to achieve the above object, the technical solutions of the present disclosure are realized as follows:
In the first aspect, an embodiment of the present disclosure provides a method for controlling a voltage of an electricity-generation-starting-up integrated electric machine, wherein the method is applied to a vehicle having such an electric machine, and the method comprises:
when the vehicle is in a voltage-controlling mode, acquiring a current battery voltage, a current battery electric current and an electric-current limit value of the vehicle;
according to the battery voltage, determining an initial target voltage;
according to a difference between the electric-current limit value and the battery electric current, determining a superposing-voltage value;
based on the superposing-voltage value and the initial target voltage, determining a target controlling voltage; and
based on the target controlling voltage, controlling the battery voltage of the vehicle.

Optionally, before the step that when the vehicle is in the voltage-controlling mode, acquiring the current battery voltage, the current battery electric current and the electric-current limit value of the vehicle, the method further comprises:
when the vehicle satisfies a voltage-controlling activating condition, controlling the vehicle to enter the voltage-controlling mode.

Optionally, the step that based on the superposing-voltage value and the initial target voltage, determining the target controlling voltage, comprises:
superposing the superposing-voltage value to the initial target voltage one time every target preset duration, to obtain one instance of the target controlling voltage.

Optionally, the step that when the vehicle satisfies the voltage-controlling activating condition, controlling the vehicle to enter the voltage-controlling mode, comprises:
when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, controlling the vehicle to enter the voltage-controlling mode.

Optionally, the step that based on the difference between the current electric current and the electric-current limit value of the battery, determining the superposing-voltage value, comprises:
if the difference between the current electric current and the electric-current limit value of the battery is greater than a maximum value of a preset difference range, calculating to obtain a positive superposing-voltage value;
if the difference between the current electric current and the electric-current limit value of the battery is within the preset difference range, setting the superposing-voltage value to be zero; and
if the difference between the current electric current and the electric-current limit value of the battery is less than a minimum value of the preset difference range, calculating to obtain a negative superposing-voltage value.

Optionally, after the step that based on the target controlling voltage, controlling the battery voltage of the vehicle, the method further comprises:
when the vehicle satisfies a condition that a battery temperature is greater than a second preset temperature and an engine rotational speed is less than a second preset engine rotational speed, controlling the vehicle to exit the voltage-controlling mode.

In the second aspect, an embodiment of the present disclosure provides an apparatus for controlling a voltage of an electricity-generation-starting-up integrated electric machine, wherein the apparatus is applied to a vehicle having such an electric machine, and the apparatus comprises:
an acquiring module configured for, when the vehicle is in a voltage-controlling mode, acquiring a current battery voltage, a current battery electric current and an electric-current limit value of the vehicle;
a first determining module configured for, according to the battery voltage, determining an initial target voltage;
a second determining module configured for, according to a difference between the electric-current limit value and the battery electric current, determining a superposing-voltage value;
a third determining module configured for, based on the superposing-voltage value and the initial target voltage, determining a target controlling voltage; and
a first controlling module configured for, based on the target controlling voltage, controlling the battery voltage of the vehicle.

Optionally, the apparatus further comprises:
a second controlling module configured for, when the vehicle satisfies a voltage-controlling activating condition, controlling the vehicle to enter the voltage-controlling mode.

Optionally, the third determining module comprises:
an obtaining submodule configured for superposing the superposing-voltage value to the initial target voltage one time every target preset duration, to obtain one instance of the target controlling voltage.

Optionally, the second controlling module comprises:
a controlling submodule configured for, when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, controlling the vehicle to enter the voltage-controlling mode.

Optionally, the second determining module comprises:
a first calculating submodule configured for, if the difference between the current electric current and the electric-current limit value of the battery is greater than a maximum value of a preset difference range, calculating to obtain a positive superposing-voltage value;
a setting submodule configured for, if the difference between the current electric current and the electric-current limit value of the battery is within the preset difference range, setting the superposing-voltage value to be zero; and
a second calculating submodule configured for, if the difference between the current electric current and the electric-current limit value of the battery is less than a minimum value of the preset difference range, calculating to obtain a negative superposing-voltage value.

Optionally, the apparatus further comprises:
a third controlling module configured for, when the vehicle satisfies a condition that a battery temperature is greater than a second preset temperature and an engine rotational speed is less than a second preset engine rotational speed, controlling the vehicle to exit the voltage-controlling mode.

As compared with the prior art, the embodiments of the present disclosure have the following advantages:
The method for controlling a voltage of an electricity-generation-starting-up integrated electric machine according to the embodiments of the present disclosure comprises, when the vehicle is in a voltage-controlling mode, acquiring a current battery voltage, a current battery electric current and an electric-current limit value of the vehicle; determining an initial target voltage according to the battery voltage; determining a superposing-voltage value according to a difference between the electric-current limit value and the battery electric current; determining a target controlling voltage based on the superposing-voltage value and the initial target voltage; and controlling the battery voltage of the vehicle based on the target controlling voltage. Accordingly, the vehicles can perform voltage-stabilization controlling by means of voltage superposition even if in conditions such as a low temperature, to merely charge the low-voltage loads and the 48V section, and not perform assisting discharging, which can precisely control the voltage, and prevent over-charge and over-discharge of the battery, thereby prolonging the life of the 48V battery.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

In order to more clearly illustrate the technical solutions of the embodiments of the present disclosure or the prior art, the figures that are required to describe the embodiments or the prior art will be briefly introduced below. Apparently, the figures that are described below are embodiments of the present disclosure, and a person skilled in the art can obtain other figures according to these figures without paying creative work.

The drawings, which form part of the present disclosure, are intended to provide a further understanding of the present disclosure. The illustrative embodiments of the present disclosure and their explanation are intended to interpret the present disclosure, and do not inappropriately limit the present disclosure. In the drawings:
FIG. 1 shows a flow chart of the steps of the method for controlling a voltage of an electric machine according to the first embodiment of the present disclosure;
FIG. 2 shows a flow chart of the steps of the method for controlling a voltage of an electric machine according to the second embodiment of the present disclosure;
FIG. 3 shows a schematic structural diagram of the apparatus for controlling a voltage of an electric machine according to the third embodiment of the present disclosure;
FIG. 4 schematically shows a block diagram of a calculating and processing device for implementing the method according to the present disclosure; and
FIG. 5 schematically shows a storage unit for maintaining or carrying a program code for implementing the method according to the present disclosure.

### DETAILED DESCRIPTION

In order to make the objects, the technical solutions and the advantages of the embodiments of the present disclosure clearer, the technical solutions of the embodiments of the present disclosure will be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

It should be noted that, subject to the avoiding of any conflict, the embodiments and the features of the embodiments of the present disclosure may be combined.

The invention is defined by the features of the independent claims. Preferred embodiments are defined in the dependent claims.

The present disclosure will be described in detail below with reference to the drawings and the embodiments.

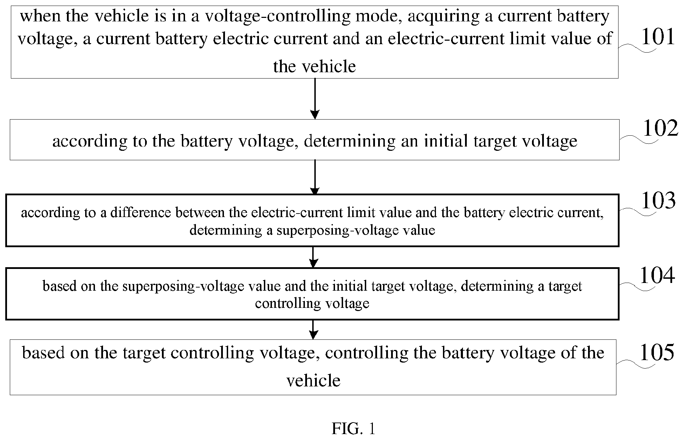

Referring to FIG. 1, a flow chart of the steps of the method for controlling a voltage of an electricity-generation-starting-up integrated electric machine according to the first embodiment of the present disclosure is shown. The method for controlling a voltage of an electricity-generation-starting-up integrated electric machine may be applied to a vehicle having an electricity-generation-starting-up integrated electric machine.

As shown in FIG. 1, the method for controlling a voltage of an electric machine may particularly comprise the following steps:
Step 101: when the vehicle is in a voltage-controlling mode, acquiring a current battery voltage, a current battery electric current and an electric-current limit value of the vehicle.

In an embodiment of the present disclosure, when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, the vehicle may be controlled to enter the voltage-controlling mode. Certainly, the condition is not limited to that. In a particular implementation, the vehicle may also enter the single-pedal-function activating mode when the vehicle is in another condition, which may particularly be configured according to actual situations, and is not limited in the embodiments of the present disclosure.

The first preset battery temperature may be -26 degrees Celsius, and may also be -20 degrees Celsius. The first preset engine rotational speed may be 1400 revolutions per minute. The preset duration may be 5 seconds. All of those data are calibrationable data, which is not particularly limited in the embodiments of the present disclosure.

Optionally, when the vehicle is in the voltage-controlling mode, the entire-vehicle controlling unit (Hybrid Control Unit, HCU) of the vehicle receives the current battery voltage, the current battery electric current and the electric-current limit value of the vehicle that are emitted by the battery.

After the step that when the vehicle is in the voltage-controlling mode, acquiring the current battery voltage, the current battery electric current and the electric-current limit value of the vehicle, the step 102 is executed.

Step 102: according to the battery voltage, determining an initial target voltage.

The initial target voltage may be equal to the battery voltage plus a compensating value, wherein the range of the compensating value is (-0.5, +0.5). Certainly, the compensating value is not limited to that. In a particular implementation, the compensating value may be determined according to the actual calibration result, which may particularly be configured according to actual situations, and is not limited in the embodiments of the present disclosure.

After the step that according to the battery voltage, determining the initial target voltage, the step 103 is executed.

Step 103: according to a difference between the electric-current limit value and the battery electric current, determining a superposing-voltage value.

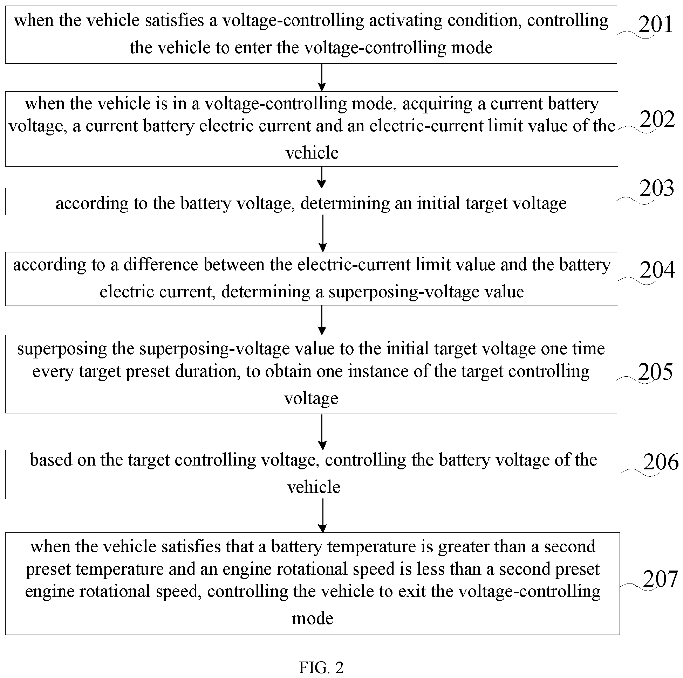

The HCU may determine a superposing-voltage value according to the difference between the electric-current limit value and the battery electric current, after calculating the difference between the current electric-current limit value and the battery electric current of the vehicle. As shown in FIG. 2, a correspondence relation between the difference between the electric-current limit value and the battery electric current and the superposing-voltage value according to an embodiment of the present disclosure is shown.

Correspondence relation between the difference between the electric-current limit value and the battery electric current and the superposing-voltage value

| | | | | | | | | | | |
|---|---|---|---|---|---|---|---|---|---|---|
| Difference/Ah | ≥100 | 80 | 60 | 40 | 30 | 15 | 13 | 10 | 7 | 5 |
| superposing-voltage value/V | 0.4 | 0.3 | 0.2 | 0.1 | 0 | 0 | -0.1 | -0.2 | -0.3 | -0.4 |

The correspondence relation between the difference between the electric-current limit value and the battery electric current and the superposing-voltage value may be pre-stored in the vehicle system, and, in turn, after the difference between the electric-current limit value and the battery electric current has been obtained by calculation, the superposing-voltage value corresponding to the difference may be determined according to the correspondence relation between the difference and the superposing-voltage value.

After the step that according to the difference between the electric-current limit value and the battery electric current, determining the superposing-voltage value, the step 104 is executed.

Step 104: based on the superposing-voltage value and the initial target voltage, determining a target controlling voltage.

The HCU may sum the superposing-voltage value and the initial target voltage after determining the superposing-voltage value, to obtain the target controlling voltage, and send the target controlling voltage to the BSG of the vehicle. Furthermore, the step 105 may be executed according to the target controlling voltage in the BSG of the vehicle.

Step 105: based on the target controlling voltage, controlling the battery voltage of the vehicle.

The BSG of the vehicle receives the target controlling voltage emitted by the HCU, to control the battery voltage of the vehicle. The controlling precision is within ±1V, and can self-adaptively change, and the controlled voltage is stable.

The method for controlling a voltage of an electricity-generation-starting-up integrated electric machine according to the embodiments of the present disclosure comprises, when the vehicle is in a voltage-controlling mode, acquiring a current battery voltage, a current battery electric current and an electric-current limit value of the vehicle; determining an initial target voltage according to the battery voltage; determining a superposing-voltage value according to a difference between the electric-current limit value and the battery electric current; determining a target controlling voltage based on the superposing-voltage value and the initial target voltage; and controlling the battery voltage of the vehicle based on the target controlling voltage. Accordingly, the vehicle can perform voltage-stabilization controlling by means of voltage superposition even if in conditions such as a low temperature, to merely charge the low-voltage loads and the 48V section, and not perform assisting discharging, which can precisely control the voltage, and prevent over-charge and over-discharge of the battery, thereby prolonging the life of the 48V battery.

Referring to FIG. 2, a flow chart of the steps of the method for controlling a voltage of an electricity-generation-starting-up integrated electric machine according to the second embodiment of the present disclosure is shown. The method for controlling a voltage of an electricity-generation-starting-up integrated electric machine is applied to a vehicle having an electricity-generation-starting-up integrated electric machine.

As shown in FIG. 2, the method for controlling a voltage of an electricity-generation-starting-up integrated electric machine may particularly comprise the following steps:
Step 201: when the vehicle satisfies a voltage-controlling activating condition, controlling the vehicle to enter the voltage-controlling mode.

In an embodiment of the present disclosure, the particular implementation process of the step 201 may comprise:

When the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, the vehicle may be controlled to enter the voltage-controlling mode. Certainly, the condition is not limited to that. In a particular implementation, the vehicle may also enter the single-pedal-function activating mode when the vehicle is in another condition, which may particularly be configured according to actual situations, and is not limited in the embodiments of the present disclosure.

The first preset battery temperature may be -26 degrees Celsius, and may also be -20 degrees Celsius. The first preset engine rotational speed may be 1400 revolutions per minute. The preset duration may be 5 seconds. All of those data are calibrationable data, which is not particularly limited in the embodiments of the present disclosure.

After the step that when the vehicle satisfies the voltage-controlling activating condition, controlling the vehicle to enter the voltage-controlling mode, the step 202 is executed.

Step 202: when the vehicle is in a voltage-controlling mode, acquiring a current battery voltage, a current battery electric current and an electric-current limit value of the vehicle.

Optionally, when the vehicle is in the voltage-controlling mode, the entire-vehicle controlling unit of the vehicle receives the current battery voltage, the current battery electric current and the electric-current limit value of the vehicle that are emitted by the battery.

After the step that when the vehicle is in the voltage-controlling mode, acquiring the current battery voltage, the current battery electric current and the electric-current limit value of the vehicle, the step 203 is executed.

Step 203: according to the battery voltage, determining an initial target voltage.

The initial target voltage may be the battery voltage plus a compensating value, wherein the range of the compensating value is (-0.5, +0.5). Certainly, the compensating value is not limited to that. In a particular implementation, the compensating value may be determined according to the actual calibration result, which may particularly be configured according to actual situations, and is not limited in the embodiments of the present disclosure.

After the step that according to the battery voltage, determining the initial target voltage, the step 204 is executed.

Step 204: according to a difference between the electric-current limit value and the battery electric current, determining a superposing-voltage value.

In an embodiment of the present disclosure, the HCU may determine a superposing-voltage value according to the difference between the electric-current limit value and the battery electric current after acquiring the difference between the current electric-current limit value and the battery electric current of the vehicle.. As shown in FIG. 2, a correspondence relation between the difference between the electric-current limit value and the battery electric current and the superposing-voltage value according to an embodiment of the present disclosure is shown.

Correspondence relation between the difference between the electric-current limit value and the battery electric current and the superposing-voltage value

| | | | | | | | | | | |
|---|---|---|---|---|---|---|---|---|---|---|
| Difference/Ah | ≥100 | 80 | 60 | 40 | 30 | 15 | 13 | 10 | 7 | 5 |
| superposing-voltage value/V | 0.4 | 0.3 | 0.2 | 0.1 | 0 | 0 | -0.1 | -0.2 | -0.3 | -0.4 |

The correspondence relation between the difference between the electric-current limit value and the battery electric current and the superposing-voltage value may be pre-stored in the vehicle system, and, in turn, after the difference between the electric-current limit value and the battery electric current has been obtained by calculation, the superposing-voltage value corresponding to the difference may be determined according to the correspondence relation between the difference and the superposing-voltage value.

In an embodiment of the present disclosure, the particular implementation process of the step 204 may comprise:
Sub-step 2041: if the difference between the current electric current and the electric-current limit value of the battery is greater than a maximum value of a preset difference range, calculating to obtain a positive superposing-voltage value.

Optionally, the preset difference range may be (15,30)Ah, and, accordingly, when the difference between the current electric current and the electric-current limit value of the battery is greater than 30Ah, referring to the above table, a corresponding positive superposing-voltage value can be obtained. For example, when the difference is 40Ah, the superposing-voltage value is 0.1. When the difference is 60Ah, the superposing-voltage value is 0.2. When the difference is 80Ah, the superposing-voltage value is 0.3, and so on.

Sub-step 2042: if the difference between the current electric current and the electric-current limit value of the battery is within the preset difference range, setting the superposing-voltage value to be zero.

Optionally, the preset difference range may be (15,30)Ah, and, accordingly, when the difference between the current electric current and the electric-current limit value of the battery is within (15,30)Ah, the superposing-voltage value is 0.

Sub-step 2043: if the difference between the current electric current and the electric-current limit value of the battery is less than a minimum value of the preset difference range, calculating to obtain a negative superposing-voltage value.

Optionally, the preset difference range may be (15,30)Ah, and, accordingly, when the difference between the current electric current and the electric-current limit value of the battery is less than 30Ah, referring to the above table, a corresponding negative superposing-voltage value can be obtained. For example, when the difference is 13Ah, the superposing-voltage value is -0.1. When the difference is 10Ah, the superposing-voltage value is -0.2. When the difference is 70Ah, the superposing-voltage value is -0.3, and so on.

It should be noted that, when the difference between the current electric current and the electric-current limit value of the battery is less than a preset critical value, the initial voltage of the battery is used as the target controlling voltage, and the superposition begins when the difference between the current electric current and the electric-current limit value of the battery is greater than a maximum value of a preset difference range.

The preset critical value may be set to be 5Ah, which is not particularly limited in the embodiments of the present disclosure.

After the step that according to the difference between the electric-current limit value and the battery electric current, determining the superposing-voltage value, the step 205 is executed.

Step 205: superposing the superposing-voltage value to the initial target voltage one time every target preset duration, to obtain one instance of the target controlling voltage.

The HCU may sum the superposing-voltage value and the initial target voltage after determining the superposing-voltage value, to obtain the target controlling voltage, wherein in the process the target voltage may be superposed one time every 5 seconds, to obtain the real-time target controlling voltage, and send the target controlling voltage to the BSG of the vehicle. Furthermore, the step 206 may be executed according to the target controlling voltage in the BSG of the vehicle.

Step 206: based on the target controlling voltage, controlling the battery voltage of the vehicle.

The BSG of the vehicle receives the target controlling voltage emitted by the HCU, to control the battery voltage of the vehicle. The controlling precision is within ±1V, and can self-adaptively change, and the controlled voltage is stable.

It should be noted that, after the vehicle has entered the voltage-controlling mode, the BSG merely performs the function of charging and supplies electric power to the low-voltage loads according to the target controlling voltage of the battery at the moment, does not perform the assisting and charging functions in the conventional torque mode, and performs voltage-stabilization controlling in the form of an electric generator with the target controlling voltage as the target. If the target controlling voltage is equal to the voltage of the 48V battery, then the BSG cannot charge the 48V battery, merely serves as an external parallel-connected voltage source, and is merely used by a device for conversion between high- and low-voltage direct currents (Direct Current Direct Current, DCDC) to convert a direct current (DC) into a 12V load. With the changing of the 12V low-voltage loads (a large lamp, a fan, and so on), the BSG self-adapts for the changing in the loads, to ensure that the voltage outputted by the BSG is stable.

After the step that based on the target controlling voltage, controlling the battery voltage of the vehicle, the step 207 is executed.

Step 207: when the vehicle satisfies a condition that a battery temperature is greater than a second preset temperature and an engine rotational speed is less than a second preset engine rotational speed, controlling the vehicle to exit the voltage-controlling mode.

The second preset temperature may be -24 degrees Celsius, and the second preset engine rotational speed may be 800 revolutions per minute.

The method for controlling a voltage of an electricity-generation-starting-up integrated electric machine according to the embodiments of the present disclosure comprises, when the vehicle satisfies a voltage-controlling activating condition, controlling the vehicle to enter the voltage-controlling mode; when the vehicle is in a voltage-controlling mode, acquiring a current battery voltage, a current battery electric current and an electric-current limit value of the vehicle; determining an initial target voltage according to the battery voltage; determining a superposing-voltage value according to a difference between the electric-current limit value and the battery electric current; superposing the superposing-voltage value to the initial target voltage one time every target preset duration, to obtain one instance of the target controlling voltage; controlling the battery voltage of the vehicle based on the target controlling voltage; and when the vehicle satisfies a condition that a battery temperature is greater than a second preset temperature and an engine rotational speed is less than a second preset engine rotational speed, controlling the vehicle to exit the voltage-controlling mode. Accordingly, the vehicle can perform voltage-stabilization controlling by means of voltage superposition even if in conditions such as a low temperature, to merely charge the low-voltage loads and the 48V section, and not perform assisting discharging, which can precisely control the voltage, and prevent over-charge and over-discharge of the battery, thereby prolonging the life of the 48V battery.

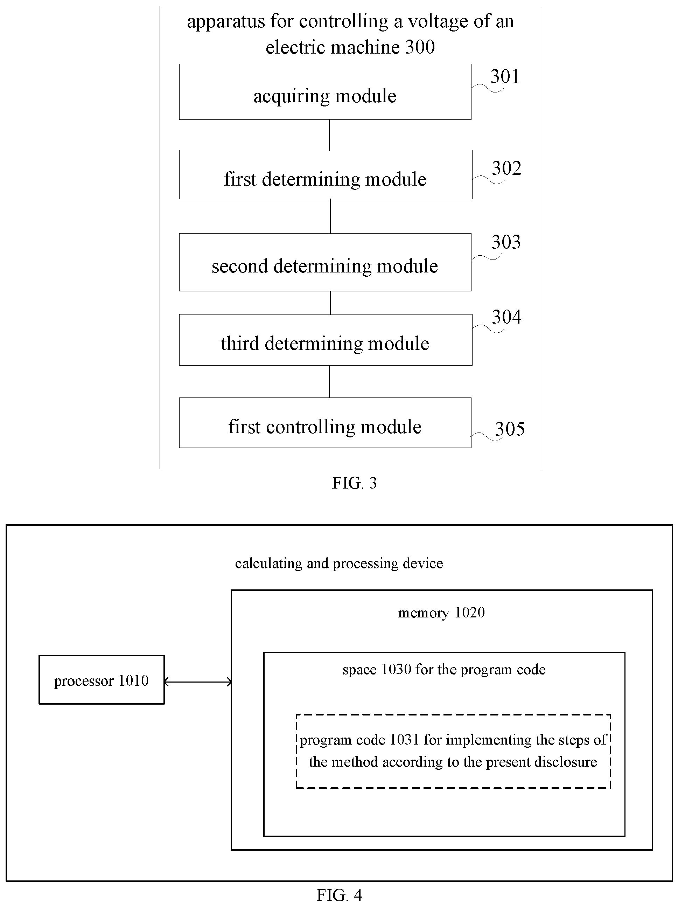

Referring to FIG. 3, a schematic structural diagram of the apparatus for controlling a voltage of an electricity-generation-starting-up integrated electric machine according to the third embodiment of the present disclosure is shown. The apparatus for controlling a voltage of an electricity-generation-starting-up integrated electric machine is applied to a vehicle having an electricity-generation-starting-up integrated electric machine.

As shown in FIG. 3, the apparatus for controlling a voltage of an electricity-generation-starting-up integrated electric machine 300 may particularly comprise:
an acquiring module 301 configured for, when the vehicle is in a voltage-controlling mode, acquiring a current battery voltage, a current battery electric current and an electric-current limit value of the vehicle;
a first determining module 302 configured for, according to the battery voltage, determining an initial target voltage;
a second determining module 303 configured for, according to a difference between the electric-current limit value and the battery electric current, determining a superposing-voltage value;
a third determining module 304 configured for, based on the superposing-voltage value and the initial target voltage, determining a target controlling voltage; and
a first controlling module 305 configured for, based on the target controlling voltage, controlling the battery voltage of the vehicle.

Optionally, the apparatus further comprises:
a second controlling module configured for, when the vehicle satisfies a voltage-controlling activating condition, controlling the vehicle to enter the voltage-controlling mode.

Optionally, the third determining module comprises:
an obtaining submodule configured for superposing the superposing-voltage value to the initial target voltage one time every target preset duration, to obtain one instance of the target controlling voltage.

Optionally, the second controlling module comprises:
a controlling submodule configured for, when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, controlling the vehicle to enter the voltage-controlling mode.

Optionally, the second determining module comprises:
a first calculating submodule configured for, if the difference between the current electric current and the electric-current limit value of the battery is greater than a maximum value of a preset difference range, calculating to obtain a positive superposing-voltage value;
a setting submodule configured for, if the difference between the current electric current and the electric-current limit value of the battery is within the preset difference range, setting the superposing-voltage value to be zero; and
a second calculating submodule configured for, if the difference between the current electric current and the electric-current limit value of the battery is less than a minimum value of the preset difference range, calculating to obtain a negative superposing-voltage value.

Optionally, the apparatus further comprises:
a third controlling module configured for, when the vehicle satisfies that a battery temperature is greater than a second preset temperature and an engine rotational speed is less than a second preset engine rotational speed, controlling the vehicle to exit the voltage-controlling mode.

The particular implementations of the apparatus for controlling a voltage of an electricity-generation-starting-up integrated electric machine according to the embodiments of the present disclosure have already been described in detail in the process section, and are not discussed herein further.

The method for controlling a voltage of an electricity-generation-starting-up integrated electric machine according to the embodiments of the present disclosure can, by using the acquiring module, when the vehicle is in a voltage-controlling mode, acquire a current battery voltage, a current battery electric current and an electric-current limit value of the vehicle; by using the first determining module, determine an initial target voltage according to the battery voltage; by using the second determining module, determine a superposing-voltage value according to a difference between the electric-current limit value and the battery electric current; by using the third determining module, determine a target controlling voltage based on the superposing-voltage value and the initial target voltage; and finally, by using the first controlling module, control the battery voltage of the vehicle based on the target controlling voltage. Accordingly, the vehicle can perform voltage-stabilization controlling by means of voltage superposition even if in conditions such as a low temperature, to merely charge the low-voltage loads and the 48V section, and not perform assisting discharging, which can precisely control the voltage, and prevent over-charge and over-discharge of the battery, thereby prolonging the life of the 48V battery.

The above description is merely preferable embodiments of the present disclosure, and is not indented to limit the present disclosure.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to the actual demands to realize the purposes of the solutions of the embodiments. A person skilled in the art can understand and implement the technical solutions without paying creative work.

Each component embodiment of the present disclosure may be implemented by hardware, or by software modules that are operated on one or more processors, or by a combination thereof. A person skilled in the art should understand that some or all of the functions of some or all of the components of the calculating and processing device according to the embodiments of the present disclosure may be implemented by using a microprocessor or a digital signal processor (DSP) in practice. The present disclosure may also be implemented as apparatus or device programs (for example, computer programs and computer program products) for implementing part of or the whole of the method described herein. Such programs for implementing the present disclosure may be stored in a computer-readable medium, or may be in the form of one or more signals. Such signals may be downloaded from an Internet website, or provided on a carrier signal, or provided in any other forms.

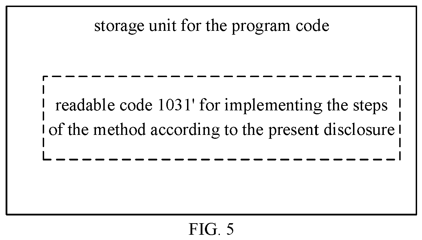

For example, FIG. 4 shows a calculating and processing device that can implement the method according to the present disclosure. The calculating and processing device traditionally comprises a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 5. The storage unit may have storage segments or storage spaces with similar arrangement to the memory 1020 of the calculating and processing device in FIG. 4. The program codes may, for example, be compressed in a suitable form. Generally, the storage unit contains a computer-readable code 1031', which can be read by a processor like 1010. When those codes are executed by the calculating and processing device, the codes cause the calculating and processing device to implement each of the steps of the method described above.

The "one embodiment", "an embodiment" or "one or more embodiments" as used herein means that particular features, structures or characteristics described with reference to an embodiment are included in at least one embodiment of the present disclosure. Moreover, it should be noted that here an example using the wording "in an embodiment" does not necessarily refer to the same one embodiment.

The description provided herein describes many concrete details. However, it can be understood that the embodiments of the present disclosure may be implemented without those concrete details. In some of the embodiments, well-known processes, structures and techniques are not described in detail, so as not to affect the understanding of the description.

In the claims, any reference signs between parentheses should not be construed as limiting the claims. The word "comprise" does not exclude elements or steps that are not listed in the claims. The word "a" or "an" preceding an element does not exclude the existing of a plurality of such elements. The present disclosure may be implemented by means of hardware comprising several different elements and by means of a properly programmed computer. In unit claims that list several devices, some of those devices may be embodied by the same item of hardware. The words first, second, third and so on do not denote any order. Those words may be interpreted as names.

Finally, it should be noted that the above embodiments are merely intended to explain the technical solutions of the present disclosure, and not to limit them. Although the present disclosure is explained in detail with reference to the above embodiments, a person skilled in the art should understand that he can still modify the technical solutions set forth by the above embodiments, or make equivalent substitutions to part of the technical features of them.

## Claims

1. A method for controlling a voltage of an electricity-generation-starting-up integrated electric machine, wherein the method is applied to a vehicle having such an electric machine, and the method comprises:
when the vehicle is in a voltage-controlling mode, acquiring (101, 202) a current battery voltage, a current battery electric current and an electric-current limit value of the vehicle;
according to the battery voltage, determining (102, 203) an initial target voltage;
according to a difference between the electric-current limit value and the battery electric current, determining (103, 204) a superposing-voltage value;
based on the superposing-voltage value and the initial target voltage, determining (104) a target controlling voltage; and
based on the target controlling voltage, controlling (105, 206) the battery voltage of the vehicle.

2. The method according to claim 1, wherein before the step that when the vehicle is in the voltage-controlling mode, acquiring the current battery voltage, the current battery electric current and the electric-current limit value of the vehicle, the method further comprises:
when the vehicle satisfies a voltage-controlling activating condition, controlling (201) the vehicle to enter the voltage-controlling mode.

3. The method according to claim 1, wherein the step that based on the superposing-voltage value and the initial target voltage, determining the target controlling voltage, comprises:
Superposing (205) the superposing-voltage value to the initial target voltage one time every target preset duration, to obtain one instance of the target controlling voltage.

4. The method according to claim 2, wherein the step that when the vehicle satisfies the voltage-controlling activating condition, controlling (201) the vehicle to enter the voltage-controlling mode, comprises:
when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, controlling the vehicle to enter the voltage-controlling mode.

5. The method according to claim 1, wherein the step that based on the difference between the current electric current and the electric-current limit value of the battery, determining (103, 204) the superposing-voltage value, comprises:
if the difference between the current electric current and the electric-current limit value of the battery is greater than a maximum value of a preset difference range, calculating to obtain a positive superposing-voltage value;
if the difference between the current electric current and the electric-current limit value of the battery is within the preset difference range, setting the superposing-voltage value to be zero; and
if the difference between the current electric current and the electric-current limit value of the battery is less than a minimum value of the preset difference range, calculating to obtain a negative superposing-voltage value.

6. The method according to claim 1, wherein after the step that based on the target controlling voltage, controlling (206) the battery voltage of the vehicle, the method further comprises:
when the vehicle satisfies a condition that a battery temperature is greater than a second preset temperature and an engine rotational speed is less than a second preset engine rotational speed, controlling (207) the vehicle to exit the voltage-controlling mode.

7. An apparatus (300) for controlling a voltage of an electricity-generation-starting-up integrated electric machine, wherein the apparatus (300) is applied to a vehicle having such an electric machine, and the apparatus (300) comprises:
an acquiring module (301) configured for, when the vehicle is in a voltage-controlling mode, acquiring a current battery voltage, a current battery electric current and an electric-current limit value of the vehicle;
a first determining module (302) configured for, according to the battery voltage, determining an initial target voltage;
a second determining module (303) configured for, according to a difference between the electric-current limit value and the battery electric current, determining a superposing-voltage value;
a third determining module (304) configured for, based on the superposing-voltage value and the initial target voltage, determining a target controlling voltage; and
a first controlling module (305) configured for, based on the target controlling voltage, controlling the battery voltage of the vehicle.

8. The apparatus (300) according to claim 7, wherein the apparatus (300) further comprises:
a second controlling module configured for, when the vehicle satisfies a voltage-controlling activating condition, controlling the vehicle to enter the voltage-controlling mode.

9. The apparatus (300) according to claim 7, wherein the third determining module comprises:
an obtaining submodule configured for superposing the superposing-voltage value to the initial target voltage one time every target preset duration, to obtain one instance of the target controlling voltage.

10. The apparatus (300) according to claim 8, wherein the second controlling module comprises:
a controlling submodule configured for, when the vehicle satisfies a condition that the electricity-generation-starting-up integrated electric machine is in a torque-controlling mode, a battery temperature is less than a first preset battery temperature, an engine rotational speed is greater than a first preset engine rotational speed and an entire vehicle has been in a preparation state for a duration greater than a preset duration, controlling the vehicle to enter the voltage-controlling mode.

11. The apparatus (300) according to claim 7, wherein the second determining module comprises:
a first calculating submodule configured for, if the difference between the current electric current and the electric-current limit value of the battery is greater than a maximum value of a preset difference range, calculating to obtain a positive superposing-voltage value;
a setting submodule configured for, if the difference between the current electric current and the electric-current limit value of the battery is within the preset difference range, setting the superposing-voltage value to be zero; and
a second calculating submodule configured for, if the difference between the current electric current and the electric-current limit value of the battery is less than a minimum value of the preset difference range, calculating to obtain a negative superposing-voltage value.

12. The apparatus (300) according to claim 7, wherein the apparatus (300) further comprises:
a third controlling module configured for, when the vehicle satisfies a condition that a battery temperature is greater than a second preset temperature and an engine rotational speed is less than a second preset engine rotational speed, controlling the vehicle to exit the voltage-controlling mode.

13. A calculating and processing device, wherein the calculating and processing device comprises:
a memory (1020) storing a computer-readable code (1031); and
one or more processors (1010), wherein when the computer-readable code (1031) is executed by the one or more processors (1010), the calculating and processing device implements the method for controlling a voltage of an electricity-generation-starting-up integrated electric machine according to any one of claims 1-6.

14. A computer program, wherein the computer program comprises a computer-readable code (1031), and when the computer-readable code (1031) is executed in a calculating and processing device, the computer-readable code (1031) causes the calculating and processing device to implement the method for controlling a voltage of an electricity-generation-starting-up integrated electric machine according to any one of claims 1-6.

15. A computer-readable medium, wherein the computer-readable medium stores the computer program according to claim 14.

## Patentansprüche

1. Verfahren zum Steuern einer Spannung einer integrierten elektrischen Maschine zum Starten der Stromerzeugung, wobei das Verfahren auf ein Fahrzeug mit einer solchen elektrischen Maschine angewendet wird und das Verfahren umfasst:
wenn sich das Fahrzeug in einem Spannungssteuermodus befindet, Erfassen (101, 202) einer aktuellen Batteriespannung, eines aktuellen Batteriestroms und eines Stromgrenzwerts des Fahrzeugs;
Bestimmen (102, 203) einer anfänglichen Zielspannung gemäß der Batteriespannung;
Bestimmen (103, 204) eines Überlagerungsspannungswerts gemäß einer Differenz zwischen dem Stromgrenzwert und dem Batteriestrom;
auf der Grundlage des Überlagerungsspannungswerts und der anfänglichen Zielspannung, Bestimmen (104) einer Zielsteuerspannung; und
auf der Grundlage der Zielsteuerspannung, Steuern (105, 206) der Batteriespannung des Fahrzeugs.

2. Verfahren nach Anspruch 1, wobei das Verfahren vor dem Schritt des Erfassens der aktuellen Batteriespannung, des aktuellen Batteriestroms und des Stromgrenzwerts des Fahrzeugs, wenn sich das Fahrzeug im Spannungssteuermodus befindet, ferner umfasst:
wenn das Fahrzeug eine Spannungssteueraktivierungsbedingung erfüllt, Steuern (201) des Fahrzeugs zum Eintritt in den Spannungssteuermodus.

3. Verfahren nach Anspruch 1, wobei der Schritt des Bestimmens der Zielsteuerspannung auf der Grundlage des Überlagerungsspannungswertes und der anfänglichen Zielspannung umfasst:
Überlagern (205) des Überlagerungsspannungswertes mit der anfänglichen Zielspannung einmal pro voreingestellter Zieldauer, um eine Instanz der Zielsteuerspannung zu erhalten.

4. Verfahren nach Anspruch 2, wobei der Schritt des Steuerns (201) des Fahrzeugs zum Eintritt in den Spannungssteuermodus, wenn das Fahrzeug die Spannungssteueraktivierungsbedingung erfüllt, umfasst:
wenn das Fahrzeug eine Bedingung erfüllt, dass sich die integrierte elektrische Maschine zum Starten der Stromerzeugung in einem Drehmomentsteuermodus befindet, eine Batterietemperatur geringer ist als eine erste voreingestellte Batterietemperatur, eine Motordrehzahl größer ist als eine erste voreingestellte Motordrehzahl und sich das gesamte Fahrzeug für eine Dauer, die größer ist als eine voreingestellte Dauer, in einem Vorbereitungszustand befunden hat, Steuern des Fahrzeugs zum Eintritt in den Spannungssteuermodus.

5. Verfahren nach Anspruch 1, wobei der Schritt des Bestimmens (103, 204) des Überlagerungsspannungswerts auf der Grundlage der Differenz zwischen dem aktuellen Strom und dem Stromgrenzwert der Batterie umfasst:
wenn die Differenz zwischen dem aktuellen Strom und dem Stromgrenzwert der Batterie größer ist als ein Maximalwert eines voreingestellten Differenzbereichs, Berechnen, um einen positiven Überlagerungsspannungswert zu erhalten;
wenn die Differenz zwischen dem aktuellen Strom und dem Stromgrenzwert der Batterie innerhalb des voreingestellten Differenzbereichs liegt, Setzen des Überlagerungsspannungswertes auf Null; und
wenn die Differenz zwischen dem aktuellen Strom und dem Stromgrenzwert der Batterie kleiner ist als ein Mindestwert des voreingestellten Differenzbereichs, Berechnen, um einen negativen Überlagerungsspannungswert zu erhalten.

6. Verfahren nach Anspruch 1, wobei das Verfahren, nach dem Schritt des Steuerns (206) der Batteriespannung des Fahrzeugs auf der Grundlage der Zielsteuerspannung, ferner umfasst:
wenn das Fahrzeug eine Bedingung erfüllt, dass eine Batterietemperatur größer als eine zweite voreingestellte Temperatur ist und eine Motordrehzahl kleiner als eine zweite voreingestellte Motordrehzahl ist, Steuern (207) des Fahrzeugs zum Austritt des Spannungssteuermodus.

7. Vorrichtung (300) zum Steuern einer Spannung einer integrierten elektrischen Maschine zum Starten der Stromerzeugung, wobei die Vorrichtung (300) an einem Fahrzeug mit einer solchen elektrischen Maschine verwendet wird, und die Vorrichtung (300) umfasst:
ein Erfassungsmodul (301), das konfiguriert ist, um, wenn sich das Fahrzeug in einem Spannungssteuermodus befindet, eine aktuelle Batteriespannung, einen aktuellen Batteriestrom und einen Stromgrenzwert des Fahrzeugs zu erfassen;
ein erstes Bestimmungsmodul (302), das konfiguriert ist, um eine anfängliche Zielspannung gemäß der Batteriespannung zu bestimmen;
ein zweites Bestimmungsmodul (303), das konfiguriert ist, um einen Überlagerungsspannungswert gemäß einer Differenz zwischen dem Stromgrenzwert und dem Batteriestrom zu bestimmen;
ein drittes Bestimmungsmodul (304), das konfiguriert ist, um eine Zielsteuerspannung auf der Grundlage des Überlagerungsspannungswertes und der anfänglichen Zielspannung zu bestimmen; und
ein erstes Steuermodul (305), das konfiguriert ist, um die Batteriespannung des Fahrzeugs auf der Grundlage der Zielsteuerspannung zu steuern.

8. Vorrichtung (300) nach Anspruch 7, wobei die Vorrichtung (300) weiterhin umfasst:
ein zweites Steuermodul, das so konfiguriert ist, wenn das Fahrzeug eine Spannungssteueraktivierungsbedingung erfüllt, um das Fahrzeug zum Eintritt in den Spannungssteuermodus zu steuern.

9. Vorrichtung (300) nach Anspruch 7, wobei das dritte Bestimmungsmodul umfasst:
ein Erfassungssubmodul, das zum Überlagern des Überlagerungsspannungswerts einmal pro voreingestellter Zieldauer mit der anfänglichen Zielspannung konfiguriert ist, um eine Instanz der Zielsteuerspannung zu erhalten.

10. Vorrichtung (300) nach Anspruch 8, wobei das zweite Steuermodul umfasst:
ein Steuersubmodul, das konfiguriert ist, um, wenn das Fahrzeug eine Bedingung erfüllt, dass sich die integrierte elektrische Maschine zum Starten der Stromerzeugung in einem Drehmomentsteuermodus befindet, eine Batterietemperatur geringer ist als eine erste voreingestellte Batterietemperatur, eine Motordrehzahl größer ist als eine erste voreingestellte Motordrehzahl und ein gesamtes Fahrzeug sich für eine Dauer, die größer ist als eine voreingestellte Dauer, in einem Vorbereitungszustand befunden hat, das Fahrzeug zu steuern, um in den Spannungssteuermodus einzutreten.

11. Vorrichtung (300) nach Anspruch 7, wobei das zweite Bestimmungsmodul umfasst:
ein erstes Berechnungssubmodul, das konfiguriert ist, um, wenn die Differenz zwischen dem aktuellen Strom und dem Stromgrenzwert der Batterie größer als ein Maximalwert eines voreingestellten Differenzbereichs ist, zu berechnen, um einen positiven Überlagerungsspannungswert zu erhalten;
ein Setzungssubmodul, das konfiguriert ist, um, wenn die Differenz zwischen dem aktuellen Strom und dem Stromgrenzwert der Batterie innerhalb des voreingestellten Differenzbereichs liegt, den Überlagerungsspannungswert auf Null zu setzen; und
ein zweites Berechnungssubmodul, das konfiguriert ist, um, wenn die Differenz zwischen dem aktuellen Strom und dem Stromgrenzwert der Batterie kleiner als ein Mindestwert des voreingestellten Differenzbereichs ist, zu berechnen, um einen negativen Überlagerungsspannungswert zu erhalten.

12. Vorrichtung (300) nach Anspruch 7, wobei die Vorrichtung (300) weiterhin umfasst:
ein drittes Steuermodul, das konfiguriert ist, um, wenn das Fahrzeug eine Bedingung erfüllt, dass eine Batterietemperatur größer als eine zweite voreingestellte Temperatur ist und eine Motordrehzahl kleiner als eine zweite voreingestellte Motordrehzahl ist, das Fahrzeug zu steuern, um den Spannungssteuermodus auszutreten.

13. Rechen- und Verarbeitungsvorrichtung, wobei die Rechen- und Verarbeitungsvorrichtung umfasst:
einen Speicher (1020), der einen computerlesbaren Code (1031) speichert; und
einen oder mehrere Prozessoren (1010), wobei, wenn der computerlesbare Code (1031) von dem einen oder den mehreren Prozessoren (1010) ausgeführt wird, die Rechen- und Verarbeitungsvorrichtung das Verfahren zum Steuern einer Spannung einer integrierten elektrischen Maschine zum Starten der Stromerzeugung nach einem der Ansprüche 1 bis 6 durchführt.

14. Computerprogramm, wobei das Computerprogramm einen computerlesbaren Code (1031) umfasst, und wenn der computerlesbare Code (1031) in einer Rechen- und Verarbeitungsvorrichtung ausgeführt wird, bewirkt der computerlesbare Code (1031), dass die Rechen- und Verarbeitungsvorrichtung das Verfahren zum Steuern einer Spannung einer integrierten elektrischen Maschine zum Starten der Stromerzeugung gemäß einem der Ansprüche 1 bis 6 ausführt.

15. Computerlesbares Medium, wobei das computerlesbare Medium das Computerprogramm nach Anspruch 14 speichert.

## Revendications

1. Procédé destiné à commander une tension d'une machine électrique intégrée à démarrage de génération d'électricité, dans lequel le procédé est appliqué à un véhicule présentant une dite machine électrique, et le procédé comprend les étapes suivantes :
lorsque le véhicule est dans un mode commande de tension, acquérir (101, 202) une tension de batterie actuelle, un courant électrique de batterie actuel, et une valeur limite de courant électrique du véhicule ;
conformément à la tension de batterie, déterminer (102, 103) une tension cible initiale ;
conformément à une différence entre la valeur limite de courant électrique et le courant électrique de batterie, déterminer (103, 204) une valeur de tension de superposition ;
sur la base de la valeur de tension de superposition et de la tension cible initiale, déterminer (104) une tension de commande cible, et
sur la base de la tension de commande cible, commander (105, 206), la tension de batterie du véhicule.

2. Procédé selon la revendication 1, dans lequel lorsque le véhicule se trouve dans le mode de commande de tension, avant l'étape d'acquisition de la tension de batterie actuelle, du courant électrique de batterie actuel, et de la valeur limite de courant électrique du véhicule, le procédé comprend en outre l'étape suivante :
lorsque le véhicule satisfait une condition d'activation de commande de tension, commander (201) le véhicule pour passer dans le mode de commande de tension.

3. Procédé selon la revendication 1, dans lequel sur la base de la valeur de tension de superposition et de la tension cible initiale, l'étape pour déterminer la tension de commande cible comprend l'étape suivante :
superposer (205) la valeur de tension de superposition à la valeur cible initiale une fois pour chaque durée prédéterminée cible, afin d'obtenir une instance de la tension de commande cible.

4. Procédé selon la revendication 2, dans lequel lorsque le véhicule satisfait la condition d'activation de commande de tension, l'étape pour commander (201) le véhicule pour passer dans le mode de commande de tension comprend :
lorsque le véhicule satisfait une condition suivant laquelle la machine électrique intégrée à démarrage de génération d'électricité se trouve dans un mode de commande de couple, une température de batterie est inférieure à une première température de batterie préréglée, une vitesse de rotation de moteur est supérieure à une première vitesse de rotation de moteur préréglée, et un véhicule tout entier s'est trouvé dans un état de préparation pour une durée supérieure à une durée préréglée, une étape pour commander le véhicule pour passer dans le mode de commande de tension.

5. Procédé selon la revendication 1, dans lequel sur la base de la différence entre le courant électrique actuel et la valeur limite de courant électrique de la batterie, l'étape pour déterminer (103, 204) la valeur de tension de superposition comprend les étapes suivantes :
si la différence entre le courant électrique actuel et la valeur limite de courant électrique de la batterie est supérieure à une valeur maximale de la plage de différence préréglée, calculer pour obtenir une valeur de tension de superposition positive ;
si la différence entre le courant électrique actuel et la valeur limite de courant électrique de la batterie est comprise dans les limites de la plage de différence préréglée, régler la valeur de tension de superposition pour qu'elle soit nulle, et
si la différence entre le courant électrique actuel et la valeur limite de courant électrique de la batterie est inférieure à une valeur minimale de la plage de différence préréglée, calculer pour obtenir une valeur de tension de superposition négative.

6. Procédé selon la revendication 1, dans lequel sur la base de la tension de commande cible, après l'étape pour commander (206) la tension de batterie du véhicule, le procédé comprend en outre l'étape suivante :
lorsque le véhicule satisfait une condition suivant laquelle une température de batterie est supérieure à une seconde température préréglée et une vitesse de rotation de moteur est inférieure à une vitesse de rotation de moteur préréglée, commander (207) le véhicule pour quitter le mode de commande de tension.

7. Appareil (300) destiné à commander une tension d'une machine électrique intégrée à démarrage de génération d'électricité, dans lequel l'appareil (300) est appliqué à un véhicule présentant une dite machine électrique, et l'appareil (300) comprend les éléments suivants :
lorsque le véhicule est dans un mode de commande de tension, un module d'acquisition (301) configuré pour acquérir une tension de de batterie actuelle, un courant électrique de batterie actuel, et une valeur limite de courant électrique du véhicule ;
conformément à la tension de batterie, un premier module de détermination (302) configuré pour déterminer une tension cible initiale ;
conformément à une différence entre la valeur limite de courant électrique et le courant électrique de batterie, un deuxième module de détermination (303) configuré pour déterminer une valeur de tension de superposition ;
sur la base de la valeur de tension de superposition et de la tension cible initiale, un troisième module de détermination (304) configuré pour déterminer une tension de commande cible, et
sur la base de la tension de commande cible, un premier module de commande (305) configuré pour commander la tension de batterie du véhicule.

8. Appareil (300) selon la revendication 7, dans lequel l'appareil (300) comprend en outre :
lorsque le véhicule satisfait la condition d'activation de commande de tension, un second module de commande configuré pour commander le véhicule pour passer dans le mode de commande de tension.

9. Appareil (300) selon la revendication 7, dans lequel le troisième module de détermination comprend :
un sous-module d'obtention configuré pour superposer la valeur de tension de superposition à la valeur cible initiale une fois pour chaque durée prédéterminée cible, afin d'obtenir une instance de la tension de commande cible.

10. Appareil (300) selon la revendication 8, dans lequel le deuxième module de commande comprend :
lorsque le véhicule satisfait une condition suivant laquelle la machine électrique intégrée à démarrage de génération d'électricité se trouve dans un mode de commande de couple, qu'une température de batterie est inférieure à une première température de batterie préréglée, qu'une vitesse de rotation de moteur est supérieure à une première vitesse de rotation de moteur, et qu'un véhicule tout entier s'est trouvé dans un état de préparation pour une durée supérieure à une durée préréglée, un sous-module de commande configuré pour commander le véhicule pour passer dans le mode de commande de tension.

11. Appareil (300) selon la revendication 7, dans lequel le deuxième module de détermination comprend :
si la différence entre le courant électrique actuel et la valeur limite de courant électrique de la batterie est supérieure à une valeur maximale de la plage de différence préréglée, un premier sous-module de calcul configuré pour calculer et obtenir une valeur de tension de superposition positive ;
si la différence entre le courant électrique actuel et la valeur limite de courant électrique de la batterie est comprise dans les limites de la plage de différence préréglée, un sous-module de réglage configuré pour régler la valeur de tension de superposition pour qu'elle soit nulle, et
si la différence entre le courant électrique actuel et la valeur limite de courant électrique de la batterie est inférieure à une valeur minimale de la plage de différence préréglée, un second sous-module de calcul configuré pour calculer et obtenir une valeur de tension de superposition négative.

12. Appareil (300) selon la revendication 7, dans lequel l'appareil (300) comprend en outre :
lorsque le véhicule satisfait une condition suivant laquelle une température de batterie est supérieure à une seconde température préréglée et une vitesse de rotation de moteur est inférieure à une seconde vitesse de rotation de moteur préréglée, un troisième module de commande configuré pour commander le véhicule pour quitter le mode de commande de tension.

13. Dispositif de calcul et de traitement, dans lequel le dispositif de calcul et de traitement comprend en outre les éléments suivants :
une mémoire (1020) stockant un code lisible par ordinateur (1031), et
un ou plusieurs processeurs (1010), dans lequel lorsque le code lisible par ordinateur (1031) est exécuté par les un ou plusieurs processeurs (1010), le dispositif de calcul et de traitement met en oeuvre le procédé pour commander une tension d'une machine électrique intégrée à démarrage de génération d'électricité selon l'une quelconque des revendications 1 à 6.

14. Programme informatique, dans lequel le programme informatique comprend un code lisible par ordinateur (1031), et lorsque le code lisible par ordinateur (1031) est exécuté dans un dispositif de calcul et de traitement, le code lisible par ordinateur (1031) fait en sorte que le dispositif de calcul et de traitement mette en oeuvre le procédé pour commander une tension d'une machine électrique intégrée à démarrage de génération d'électricité selon l'une quelconque des revendications 1 à 6.

15. Support lisible par ordinateur, dans lequel le support lisible par ordinateur stocke le programme informatique selon la revendication 14.
